Europäisches Patentamt

European Patent Office

Office européen des brevets

(19)

(11) Veröffentlichungsnummer : **0 074 558**
**B1**

(12) **EUROPÄISCHE PATENTSCHRIFT**

(45) Veröffentlichungstag der Patentschrift :
**11.12.85**

(21) Anmeldenummer : **82108020.7**

(22) Anmeldetag : **01.09.82**

(51) Int. Cl.⁴ : **C 08 G 69/48, C 08 G 73/02,**
**D 21 H 3/58, D 21 H 3/48**

(54) **Verfahren zur Herstellung von wasserlöslichen, stickstoffhaltigen Kondensationsprodukten und deren Verwendung bei der Papierherstellung.**

(30) Priorität : **10.09.81 DE 3135830**

(43) Veröffentlichungstag der Anmeldung :
**23.03.83 Patentblatt 83/12**

(45) Bekanntmachung des Hinweises auf die Patenterteilung : **11.12.85 Patentblatt 85/50**

(84) Benannte Vertragsstaaten :
**BE CH DE FR GB IT LI NL SE**

(56) Entgegenhaltungen :
**EP-A- 0 031 899**
**DE-B- 1 906 450**
**US-A- 3 125 552**
**US-A- 3 951 921**

(73) Patentinhaber : **BASF Aktiengesellschaft**
**Carl-Bosch-Strasse 38**
**D-6700 Ludwigshafen (DE)**

(72) Erfinder : **Hertel, Otto, Dr.**
**Koenigsbacher Strasse 68**
**D-6700 Ludwigshafen (DE)**
Erfinder : **Linhart, Friedrich, Dr.**
**Richard-Kuhn-Strasse 37**
**D-6900 Heidelberg (DE)**
Erfinder : **Scharf, Emil, Dr.**
**Mohnstrasse 51**
**D-6700 Ludwigshafen (DE)**

**0 074 558**

**Beschreibung**

Es ist bekannt, bei der Herstellung von Papier und Karton Polyethylenimin als Hilfsmittel zur Entwässerungsbeschleunigung sowie zur Fixierung von Pigmenten, Feinstfasern und anderen anionisch reagierenden Zusatzstoffen im Papier zu verwenden. Polyethylenimin ist jedoch nur im neutralen und schwach sauren pH-Bereich als Hilfsmittel in der Papierindustrie brauchbar. Man hat daher Produkte entwickelt, die auch im sauren pH-Bereich als Entwässerungshilfsmittel und Retentionshilfsmittel eingesetzt werden können. Produkte dieser Art werden beispielsweise durch Umsetzung von Polyaminen mit Epichlorhydrin hergestellt, vgl. DE-A-15 70 296. Es ist außerdem bekannt, daß man durch Vernetzen von Polyamidoaminen mit Epichlorhydrin Retentionsmittel und Entwässerungshilfsmittel herstellen kann. Während vernetzte Polyamine die beste Wirkung im neutralen pH-Bereich haben, liegt das Wirkungsmaximum vernetzter Polyamidoamine im sauren pH-Bereich.

Aus der DE-A-17 95 392 ist ein Verfahren zur Herstellung von wasserlöslichen, vernetzten Polyamidoaminen bekannt, bei dem man Polyamidoamine mit bifunktionellen Vernetzern umsetzt, die durch Reaktion von Bis-tert.-Aminen oder sekundären Aminen mit Epichlorhydrin hergestellt werden. Die so erhaltenen wasserlöslichen, vernetzten Polyamidoamine werden als Flockungsmittel, Flotationsmittel und Retentionsmittel in der Papierindustrie bzw. als Hilfsmittel bei der Reinigung von Schwebstoffe enthaltenden Abwässern verwendet. Wegen des Gehalts an quaternären Stickstoffatomen läßt die Wirksamkeit der so hergestellten wasserlöslichen, vernetzten Polyamidoamine bei der Anwendung als Papierhilfsmittel zu wünschen übrig.

Aus der DE-A-24 34 816 ist ein Verfahren zur Herstellung von stickstoffhaltigen Kondensationsprodukten bekannt, bei dem man gegebenenfalls mit Ethylenimin gepfropfte Polyamidoamine mit $\alpha,\omega$-Chlorhydrinethern von Polyalkylenoxiden mit 8 bis 100 Alkylenoxideinheiten bis zur Bildung gerade noch wasserlöslicher Produkte umsetzt. Diese Produkte besitzen bei der Anwendung als Papierhilfsmittel sehr gute Wirksamkeiten sowohl im sauren als auch im neutralen pH-Bereich, haben aber eine relativ niedrige Kationenaktivität. Aus Gründen des Umweltschutzes ist man bei der Papierfabrikation jedoch gezwungen, den Frischwasserbedarf pro kg erzeugtes Papier weitmöglichst zu senken. Man geht daher dazu über, die Wasserkreisläufe in Papiermaschinen immer mehr zu schließen. Diese Maßnahme führt jedoch zu einer Anhäufung extrem hoher Feinstoffanteile und zur Aufkonzentrierung von löslichen Störstoffen im Kreislaufwasser der Papiermaschine. Dadurch ergeben sich beispielsweise Probleme bei der Entwässerung und auch Qualitätsverschlechterungen des erzeugten Papiers. Mit den Papierhilfsmitteln, die sich bisher in der Praxis bewährt haben, sind die Probleme, die bei geschlossenen Wasserkreisläufen in Papiermaschinen auftreten, nicht immer zu lösen.

Aus der DE-A-30 03 648 ist ein Verfahren zur Herstellung von wasserlöslichen, stickstoffhaltigen Kondensationsprodukten bekannt, bei dem man Polyamine, Polyamidoamine oder Polyetheramine in wäßriger Lösung mit Vernetzern bei Temperaturen bis zu 200 °C unter Bildung von wasserlöslichen Harzen umsetzt. Als Vernetzer werden dabei Kondensationsprodukte verwendet, die durch eine zweistufige Umsetzung von disekundären Diaminen mit Epichlorhydrin und/oder Dichlorhydrin erhalten werden. Man verwendet die Kondensationsprodukte als Entwässerungshilfsmittel und Retentionsmittel bei der Herstellung von Papier. Sie sind zwar weniger anfällig gegen Störstoffe als andere Entwässerungshilfsmittel, jedoch ist ihre Wirksamkeit verbesserungsbedürftig.

Aus der US-A-3 951 921 sind wasserlösliche, stickstoffhaltige Kondensationsprodukte bekannt, die durch Umsetzung von Ammoniak oder primären Aminen mit wasserlöslichen Reaktionsprodukten aus Epichlorhydrin oder Dichlorhydrin und Polyamidoaminen in wäßriger Lösung bei Temperaturen von 0 bis 150 °C hergestellt und als Retentionsmittel verwendet werden.

Gegenstand der DE-B-1 906 450 sind selbstvernetzende wasserlösliche, stickstoffhaltige Kondensationsprodukte, die durch Umsetzung von basischen Polyamiden mit Epichlorhydrin oder $\alpha$-Dichlorhydrinen und Reaktion der dabei entstehenden Produkte mit Polyaminen, die mindestens zwei durch wenigstens drei Kohlenstoffatome voneinander getrennte Stickstoffatome und mindestens zwei an verschiedene Stickstoffatome gebundene Wasserstoffatome enthalten, in wäßriger Lösung bei 25 bis 95 °C hergestellt werden. Diese Kondensationsprodukte werden als Naßfestmittel für Papier verwendet.

Der Erfindung liegt die Aufgabe zugrunde, ein Verfahren zur Herstellung von wasserlöslichen, stickstoffhaltigen Kondensationsprodukten zur Verfügung zu stellen, gemäß dem Produkte erhältlich sind, die bei der Anwendung als Retentionsmittel und Entwässerungshilfsmittel bei der Herstellung von Papier eine optimale Wirkung im sauren pH-Bereich besitzen.

Die Aufgabe wird erfindungsgemäß gelöst mit einem Verfahren zur Herstellung von wasserlöslichen, stickstoffhaltigen Kondensationsprodukten durch Umsetzung von Vernetzern, die durch

a) Kondensieren von 1 Mol einere Dicarbonsäure mit 4 bis 10 Kohlenstoffatomen mit 1 bis 2 Mol eines Polyalkylenpolyamins, das 3 bis 10 basische Stickstoffatome im Molekül aufweist, zu Polyamidoaminen und

b) Umsetzung der Polyamidoamine mit Epichlorhydrin und/oder Dichlorhydrin in wäßriger Lösung bei einem pH-Wert von 4,5 bis 8,5 und einer Temperatur bis 100 °C

hergestellt werden, wobei man auf 100 Gewichtsteile der Polyamidoamine gemäß a) 1 bis 130 Gewichtsteile Epichlorhydrin und/oder Dichlorhydrin einsetzt, mit Aminen in wäßriger Lösung bei

2

Temperaturen bis 100 °C unter Bildung von wasserlöslichen Harzen, wenn man als Amin Ethylendiamin einsetzt. Die so erhaltenen wasserlöslichen Harze werden als Retentionsmittel, Flockungsmittel und Entwässerungshilfsmittel bei der Herstellung von Papier verwendet.

Die Vernetzer werden in einer zweistufigen Reaktion hergestellt. In der Stufe a) kondensiert man 1 Mol einer Dicarbonsäure, die 4 bis 10 Kohlenstoffatome enthält, mit 1 bis 2 Mol eines Polyalkylenpolyamins, das 3 bis 10 basische Stickstoffatome im Molekül aufweist. Man erhält dabei Polyamidoamine. Geeignete Dicarbonsäuren, die für die Herstellung der Polyamidoamine eingesetzt werden, sind Bernsteinsäure, Maleinsäure, Adipinsäure, Glutarsäure, Korksäure, Sebacinsäure oder Terephthalsäure. Für die Herstellung der Polyamidoamine ist es auch möglich, Mischungen von Dicarbonsäuren zu verwenden, z. B. Mischungen aus Adipinsäure und Glutarsäure oder Maleinsäure und Adipinsäure. Vorzugsweise verwendet man Adipinsäure. Die Carbonsäuren werden mit Polyalkylenpolyaminen oder Gemischen davon kondensiert, die 3 bis 10 basische Stickstoffatome im Molekül enthalten, z. B. Diethylentriamin, Triethylentetramin, Tetraethylenpentamin, Dipropylentriamin, Tripropylentetramin, Dihexamethylentriamin oder Bisaminopropylpiperazin. Die Amine können gegebenenfalls bis zu 10 Gew.% eines Diamins, wie Ethylendiamin oder Hexamethylendiamin enthalten. Die Kondensation der Dicarbonsäure mit den Polyalkylenpolyaminen wird vorzugsweise in Substanz durchgeführt, kann jedoch auch in einem gegenüber diesen Substanzen inerten Lösungsmittel vorgenommen werden. Die Kondensation erfolgt in dem Temperaturbereich von 80 bis 200 °C. Das bei der Reaktion entstehende Wasser wird aus dem System abdestilliert. Die Kondensation kann auch in Gegenwart von Lactonen oder Lactamen von Carbonsäuren mit 5 bis 12 Kohlenstoffatomen durchgeführt werden. Diese Produkte werden in das Polyamidoamin eingebaut.

Zur Herstellung des Vernetzers setzt man in der Reaktionsstufe b) (2. Reaktionsstufe) die Polyamidoamine gemäß Reaktionsstufe a) mit Epichlorhydrin und/oder Dichlorhydrin in wäßriger Lösung bei einem pH-Wert von 4,5 bis 8,5 und Temperaturen bis zu 100 °C um. Die gemäß a) erhaltenen Polyamidoamine werden in Wasser gelöst und durch Zugabe von anorganischen oder organischen Säuren auf den genannten pH-Wert eingestellt. Die Konzentration der Polyamidoamine in Wasser kann in einem weiten Bereich schwanken und beträgt vorzugsweise 20 bis 60 Gew.%. Als organische Säuren werden beispielsweise Ameisensäure, Essigsäure, Propionsäure und Oxalsäure verwendet, während als anorganische Säuren vorzugsweise Salzsäure, Schwefelsäure und Phosphorsäure in Betracht kommen. Der pH-Wert der wäßrigen Lösung der Polyamidoamine beträgt vorzugsweise 5 bis 7. Die Reaktionstemperaturen in der 2. Reaktionsstufe liegen zwischen 0 und 100, vorzugsweise zwischen 20 und 60 °C. Die Umsetzung der Polyamidoamine mit Epichlorhydrin und/oder Dichlorhydrin verläuft praktisch quantitativ. Sie ist beendet, sobald kein Epichlorhydrin oder Dichlorhydrin mehr nachweisbar ist. Die Reaktionsdauer beträgt etwa 5 Minuten bis 3 Stunden.

Auf 100 Gewichtsteile der Polyamidoamine gemäß Stufe a) setzt man 1 bis 130, vorzugsweise 10 bis 100 Gewichtsteile Epichlorhydrin oder Dichlorhydrin oder eine Mischung aus Epichlorhydrin und Dichlorhydrin ein.

Die so hergestellten polymeren Vernetzer sind in Wasser löslich. Die Viskosität 20 gew.%iger Lösungen der Vernetzer beträgt ca. 1 bis 1 000 mPas und liegt vorzugsweise in dem Bereich von 10 bis 100 mPas (jeweils gemessen bei 20 °C).

Die polymeren Vernetzer werden bei dem erfindungsgemäßen Verfahren zum Vernetzen von Ammoniak, primären Aminen, 2 bis 4 N-Atome enthaltenden Polyaminen, Polyetheraminen oder Polyamidoaminen verwendet. Man führt die Umsetzung in der Weise durch, daß man in allen Fällen wasserlösliche Harze enthält. Die Vernetzung der genannten NH-Gruppen enthaltenden Verbindungen erfolgt in wäßriger Lösung bei pH-Werten von 7 bis 12, vorzugsweise von 7,5 bis 9,5, und Temperaturen von 20 bis 100 und vorzugsweise 40 bis 70 °C.

Geeignete primäre Amine sind beispielsweise Methylamin, Ethylamin und Propylamin. Beispiele für 2 bis 4 N-Atome enthaltende Polyamide sind Diethylentriamin, Ethylendiamin, Triethylentetramin, Dipropylentriamin, Tripropylentetramin, Aminopropylethylendiamin und Diaminopropylethylendiamin.

Auch Polyetheramine können mit den oben beschriebenen Vernetzern zu wasserlöslichen Harzen umgesetzt werden. Geeignete Polyetheramine sind Verbindungen, die beispielsweise durch Umsetzung von aliphatischen Polyaminen (vgl. DE-A-1 570 296) mit Polyepihalogenhydrinen, die 2 bis 30 Halogenmethylreste enthalten, hergestellt werden. Polyetheramine werden auch erhalten, indem man 2 bis 100, vorzugsweise 8 bis 50 Ethylenoxideinheiten enthaltende Polyglykole an den endständigen OH-Gruppen mit Epichlorhydrin in die entsprechenden $\alpha,\omega$-Dichlorhydrinether überführt und diese dann mit Polyaminen, Ammoniak oder Aminen reagieren läßt. Eine andere Herstellmöglichkeit besteht darin, Polyglykolether mit Acrylnitril umzusetzen und die dabei erhaltenen Reaktionsprodukte zu hydrieren.

Eine weitere Klasse von Verbindungen, die mit den polymeren Vernetzern umgesetzt werden kann, sind basische Polyamidoamine, d. h. freie NH- und $NH_2$-Gruppen enthaltende Polyamidoamine. Hierbei handelt es sich im wesentlichen um die Kondensationsprodukte, die für die Herstellung der polymeren Vernetzer in der Stufe a) angegeben sind sowie um Polyamidoamine, die durch Kondensieren von $C_1$- bis $C_{20}$-Monocarbonsäuren mit Oligo- oder Polyaminen erhalten werden. Aber auch mit Ethylenimin gepfropfte Polyamidoaminharze sind geeignet.

Vorzugsweise werden gemäß dem erfindungsgemäßen Verfahren Ammoniak und Ethylendiamin sowie Gemische der genannten Verbindungen mit den polymeren Vernetzern umgesetzt.

Das Verhältnis von polymeren Vernetzern zu den Verbindungen, die damit umgesetzt werden, kann in einem weiten Bereich variiert werden, wobei lediglich darauf zu achten ist, daß wasserlösliche Verbindungen erhalten werden. Pro 100 Gewichtsteile Ammoniak, eines primären Amins, eines 2 bis 4 N-Atome enthaltenden Polyamins, Polyetheramins oder Polyamidoamins oder Gemischen der genannten Stoffe verwendet man 98 bis 2 Gewichtsteile, vorzugsweise 50 bis 95 Gewichtsteile des polymeren Vernetzers. Die Kondensationsreaktion kann kontinuierlich oder diskontinuierlich durchgeführt werden.

Zur Herstellung der wasserlöslichen, stickstoffhaltigen Kondensationsprodukte kann man beispielsweise so vorgehen, daß man die zu vernetzenden Verbindungen in einem Reaktionsgefäß vorlegt, etwa 10 bis 60 % des polymeren Vernetzers zugibt, das Reaktionsgemisch auf eine Temperatur in dem Bereich von 40 bis 100 °C erhitzt und weiteren polymeren Vernetzer nach Maßgabe des Verbrauchs kontinuierlich oder portionsweise zufügt. Man kann jedoch auch so verfahren, daß man den polymeren Vernetzer und die zu vernetzende Verbindung mischt und die Mischung langsam auf die Reaktionstemperatur erhitzt. Bei der Vernetzung von Ammoniak und niedrigsiedenden Aminen kann die Reaktion vorteilhaft auch unter Druck, z. B. bis 100 bar, vorzugsweise 2 bis 10 bar durchgeführt werden. Eine andere Verfahrensweise besteht darin, daß man zunächst 5 bis 60 % einer Mischung aus polymerem Vernetzer und mindestens einer zu vernetzenden Verbindung in einem Reaktionsgefäß vorlegt, die Mischung dann auf die Reaktionstemperatur erhitzt und den Rest der Mischung aus polymeren Vernetzern und zu vernetzender Verbindung nach Maßgabe der Umsetzung zuführt. Polymere Vernetzer und zu vernetzende Verbindung (NH-Gruppen enthaltende Verbindungen) können auch getrennt in die Reaktionszone eingebracht werden. Falls die Viskosität des Reaktionsgemisches bei der Kondensation zu stark ansteigen sollte, so daß die Reaktionskomponenten nicht mehr ohne weiteres gemischt werden können, wird das Reaktionsgemisch durch Zugabe eines Lösungsmittels, vorzugsweise Wasser, verdünnt. Je nach Reaktionsbedingungen — Temperatur und Konzentration der Reaktionspartner — ist die Kondensationsreaktion nach etwa 30 Minuten bis 15 Stunden beendet. Die Kondensation wird soweit geführt, daß wasserlösliche hochmolekulare Harze erhalten werden, die, gemessen bei 20 °C in 20 %iger wäßriger Lösung, eine Viskosität von mindestens 100 mPas aufweisen. Vorzugsweise stellt man Harze her, deren Viskositäten in 20 %iger wäßriger Lösung bei 20 °C 400 bis 2 500 mPas betragen. Der Verlauf der Vernetzungsreaktion kann leicht verfolgt werden, indem man dem Reaktionsgemisch Proben entnimmt und deren Viskosität unter den definierten Bedingungen bestimmt. Die Konzentration der anfallenden Harzlösungen in Wasser kann in einem weiten Bereich schwanken, z. B. zwischen 1 und 50 Gew.%. Die Konzentration der Lösung wird vorzugsweise so gewählt, daß Harzlösungen entstehen, die 5 bis 30 Gew. % Feststoffgehalt aufweisen.

Die so hergestellten wasserlöslichen, stickstoffhaltigen Kondensationsprodukte werden bei der Papierherstellung als Retentionsmittel, Flockungsmittel und Entwässerungshilfsmittel verwendet. Man kann das Reaktionsgemisch direkt nach der Herstellung oder nach Verdünnen mit Wasser bei der Papierherstellung einsetzen. Der pH-Wert der wäßrigen Lösung des Reaktionsgemisches liegt vorzugsweise in dem Bereich von 7,5 bis 10. Die wasserlöslichen, stickstoffhaltigen Kondensationsprodukte werden bei der Herstellung von Papier dem Papierstoff in einer Menge von 0,01 bis 0,3 Gew. %, bezogen auf trockenen Faserstoff, zugesetzt.

Die in den Beispielen angegebenen Teile sind Gewichtsteile, die Angaben in Prozent beziehen sich auf das Gewicht der Stoffe. Die erfindungsgemäß hergestellten Produkte wurden als Entwässerungshilfsmittel getestet und bezüglich dieser Eigenschaft mit bekannten Entwässerungshilfsmitteln verglichen. Die Entwässerungsbeschleunigung wurde anhand der Mahlgradsenkung in °SR charakterisiert. Der Mahlgrad nach Schopper-Riegler wurde nach der Vorschrift des Merkblatts 107 des Vereins der Zellstoff- und Papierchemiker und Ingenieure bestimmt. Sofern in den Beispielen nichts anderes angegeben ist, beziehen sich die Viskositätsangaben auf Meßergebnisse, die an 20 gew. %igen wäßrigen Lösungen bei einer Temperatur von 20 °C mit einem Haake-Rotationsviskosimeter ermittelt wurden, wobei in dem Viskositätsbereich unter 1 000 mPas ein Schergefälle von 49 $s^{-1}$ und darüber ein solches von 24,5 $s^{-1}$ eingestellt wurde.

Die Füllstoffretention wurde durch den Aschegehalt von Papierblättern charakterisiert, die mit Hilfe eines Rapid-Köthen-Gerätes nach Merkblatt 108 des Vereins der Zellstoff- und Papierchemiker und Ingenieure hergestellt wurden.

Herstellung der Vernetzer

Vernetzer I

In einem beheizbaren Gefäß, das mit Rührer, Thermometer und absteigendem Kühler ausgestattet war, wurden 100 Teile Diethylentriamin, 50 Teile Wasser und 131 Teile Adipinsäure gemischt. Sobald sich die Adipinsäure gelöst hatte, wurde die klare Lösung unter Stickstoffatmosphäre innerhalb von 3 Stunden auf eine Temperatur von 190 °C erhitzt. Hierbei destillierte zunächst das zugesetzte Wasser sowie das bei der Kondensationsreaktion entstandene Wasser ab.

Nach einer Kondensationsdauer von 4 Stunden bei einer Temperatur von 190 °C wurde die Schmelze unter vermindertem Druck bei 10 mbar auf eine Temperatur von 130 °C abgekühlt. Bei dieser Temperatur fügte man zu dem hochviskosen Polyamidoamin 283,5 Teile Wasser. Man erhielt eine wäßrige Harzlösung, deren Feststoffgehalt 42,9 % (bestimmt durch zweistündiges Trocknen von 0,5 g Harz bei 120 °C im Trockenschrank) und deren Viskosität 1 050 mPas betrug (gemessen bei 25 °C nach der Kugelfallmethode, Höppler-Viskosimeter). Die Säurezahl, bezogen auf 100 %iges Harz, betrug 3,74 und der Gehalt an basischem Stickstoff 6,2 %. Eine 1 %ige Harzlösung hatte in 2 %iger wäßriger Kochsalzlösung bei einer Temperatur von 25 °C eine spezifische Viskosität von 0,159.

In der Stufe b) der Herstellung des Vernetzers wurden 100 Teile der 42,9 %igen wäßrigen Lösung des Polyamidoamins bei einer Temperatur von 65 °C mit 6,9 Teilen 37,2 %iger Salzsäure auf einen pH-Wert von 7,5 eingestellt. Hierauf fügte man innerhalb von 5 Minuten bei einer Temperatur von 65 °C 7,2 Teile Epichlorhydrin zu. Man rührte die Lösung 5 Minuten bei 65 °C und stellte durch Zugabe von 9,7 Teilen 37,2 %iger Salzsäure den pH-Wert des Reaktionsgemisches auf 5. Nach Zugabe von 111,8 Teilen Wasser erhielt man eine wäßrige Lösung des Vernetzers I, deren Konzentration 20 % (berechnet chloridfrei) betrug. Der Trockenwert der Harzlösung (ermittelt durch Trocknen von 0,5 g Harzlösung innerhalb von 2 Stunden bei 120 °C) betrug 23,6 %. Die Auslaufzeit (Fordbecher, 4 mm-Düse) betrug 12,9 s.

### Vernetzer II

In einem beheizbaren Gefäß, das mit Rührer, absteigendem Kühler und Thermometer ausgestattet war, wurden 200 Teile (1 Mol) Bisaminopropylpiperazin, 87 Teile (0,5 Mol) Sebacinsäure und 100 Teile Wasser gemischt und innerhalb von 3 Stunden auf eine Temperatur von 190 °C erhitzt. Hierbei destillierte man zunächst das zugesetzte Wasser und anschließend das bei der Kondensationsreaktion entstandene Wasser ab. Nach einer Kondensationsdauer von 4 Stunden bei einer Temperatur von 190 °C wurde die Schmelze unter vermindertem Druck bei 10 mbar auf eine Temperatur von 130 °C abgekühlt. Bei dieser Temperatur fügte man zur Schmelze 251 Teile Wasser zu. Man erhielt eine 50 %ige niedrigviskose Harzlösung.

In der Stufe b) der Herstellung des Vernetzers wurden 100 Teile der 50 %igen Harzlösung bei 65 °C mit 19,5 Teilen konzentrierter Salzsäure (37,2 %) auf einen pH-Wert von 5 eingestellt. Hierauf fügte man innerhalb von 5 Minuten 27,6 Teile Epichlorhydrin zu und rührte das Reaktionsgemisch noch 15 Minuten bei einer Temperatur von 65 °C. Dann gab man 188 Teile Wasser zu und erhielt so eine wäßrige Lösung des Vernetzers II mit einem Feststoffgehalt von 20 % (berechnet chloridfrei).

### Herstellung der wasserlöslichen Harze

### Beispiel 1

Zu 18 Teilen Ethylendiamin wurden bei einer Temperatur von 70 °C innerhalb von 1,5 Stunden 478,4 Teile der wäßrigen Lösung des Vernetzers I zugegeben. Der pH-Wert der Reaktionsmischung wurde dabei durch Zugabe von 50 %iger wäßriger Natronlauge in dem Bereich von 9 bis 9,5 gehalten. Insgesamt benötigte man 35,2 Teile Natronlauge.

Mit fortschreitender Zugabe des Vernetzers wurde die Reaktionsmischung langsam viskoser. Man fügte solange Vernetzerlösung zu, bis die Reaktionsmischung an einem eingetauchten Glasstab nicht mehr abtropfte, sondern Fäden zog. Die viskose Lösung wurde danach noch etwa 1 Stunde bei einer Temperatur von 70 °C gerührt und dann auf Raumtemperatur abgekühlt. Durch Zugabe von 24,6 Teilen Ameisensäure (98 %ig) wurde das Reaktionsgemisch auf einen pH-Wert von 8 eingestellt. Anschließend gab man zu der Polymerlösung noch 2,3 Teile einer 5 %igen wäßrigen Natriumbisulfitlösung und 0,46 Teile einer 5 %igen wäßrigen Lösung von Hydroxylammoniumhydrochlorid zu. Man erhielt ein wasserlösliches, stickstoffhaltiges Harz in Form einer wäßrigen Lösung mit einem Polymeranteil von 20,3 % (berechnet chloridfrei) und einem Trockenwert (ermittelt wie oben beschrieben) von 29,5 %. Die Viskosität betrug 473 mPas.

### Beispiel 2

Zu einer Mischung von 29,6 Teilen 1,8-Diamino-3,6-dioxaoctan und 48 Teilen Ethylendiamin werden bei einer Temperatur von 50 °C innerhalb von 3 Stunden 1 590 Teile der wäßrigen Lösung des Vernetzers I gegeben. Durch Zugabe von 50 %iger wäßriger Natronlauge wurde der pH-Wert der Reaktionsmischung in dem Bereich von 9 bis 9,5 gehalten.

Hierzu waren insgesamt 117 Teile 50 %iger Natronlauge erforderlich. Im Verlauf der Vernetzerzugabe wurde die Mischung allmählich viskos. Nach Beendigung der Vernetzerzugabe rührte man das Reaktionsgemisch noch 1 Stunde bei einer Temperatur von 70 °C und stellte anschließend durch Zugabe von 82 Teilen 97 %iger Ameisensäure den pH-Wert des Reaktionsgemisches auf 8 ein. Das wasserlösliche, stickstoffhaltige Harz hatte einen Polymerengehalt von 21,2 % (berechnet chloridfrei). Die Viskosität einer 20 %igen wäßrigen Lösung des Harzes betrug 625 mPas.

### Beispiel 3

In einem beheizbaren Gefäß, das mit Thermometer und Rührer ausgestattet war, wurde eine Mischung aus 20 Teilen Ethylendiamin, 10 Teilen Methylamin, 10 Teilen Diethylentriamin und 40 Teilen Wasser bei einer Temperatur von 25 °C mit 149 Teilen der wäßrigen Lösung des Vernetzers II gemischt. Das Reaktionsgemisch wurde dann innerhalb von 15 Minuten auf eine Temperatur von 65 °C erhitzt. Der pH-Wert wurde durch Zugabe von 50 %iger wäßriger Natronlauge auf 9 eingestellt. Hierzu waren 38 Teile erforderlich. Im Verlauf von weiteren 3 Stunden fügte man weitere 155 Teile der wäßrigen Lösung des Vernetzers II zu, wobei der pH-Wert durch Zugabe von 42 Teilen 50 %iger wäßriger Natronlauge in den Bereich von 9 bis 9,5 gehalten wurde. Im Verlauf der Vernetzerzugabe stieg die Viskosität der Reaktionslösung an. Nach beendeter Zugabe des Vernetzers wurde das Reaktionsgemisch noch 1 Stunde bei einer Temperatur von 65 °C gerührt und anschließend auf eine Temperatur von 20 °C abgekühlt. Man erhielt eine wäßrige Lösung eines stickstoffhaltigen Harzes mit einem Polymergehalt von 21,62 % (berechnet chloridfrei). Der pH-Wert der Lösung betrug 9. Die Viskosität einer 20 %igen wäßrigen Lösung (Rotationsviskosimeter) betrug 700 mPas.

## Vergleichsbeispiel 1 (Beispiel gemäß DE-B-2 434 816)

100 Teile einer 20 %igen wäßrigen Lösung eines mit Ethylenimin modifizierten Polyamidoamins aus Diethylentriamin und Adipinsäure wurden auf eine Temperatur von 60 °C erhitzt und durch Zugabe von 40,5 Teilen einer 20 %igen wäßrigen Lösung eines Vernetzers aus einem Polyglykolether des Molekulargewichts 1 500, der mit 2,05 Mol Epichlorhydrin umgesetzt worden ist, bis zur Bildung hochmolekularer Produkte vernetzt. Die Vernetzungsreaktion dauerte 350 Minuten. Nach dieser Zeit erhielt man ein Kondensationsprodukt, dessen 20 %ige wäßrige Lösung bei einer Temperatur von 25 °C eine Viskosität von 830 mPas hatte.

## Vergleichsbeispiel 2 (gemäß DE-A-3 003 648, Beispiel 3)

Das im Vergleichsbeispiel 1 beschriebene mit Ethylenimin modifizierte Polyamidoaminharz wurde mit einem Vernetzer kondensiert, der durch 2stufige Umsetzung von Piperazin mit Epichlorhydrin erhalten wurde, wobei das Molverhältnis von Piperazin zu Epichlorhydrin in der ersten Reaktionsstufe 1 : 0,75 und der pH-Wert in dem Bereich von 10 bis 10,5 lag und in der zweiten Reaktionsstufe bei pH 7 Epichlorhydrin zugesetzt wurde, so daß ein Harz entstand, in dem das Molverhältnis von Piperazin zu Epichlorhydrin 1 : 1,25 betrug.

Eine 20 %ige wäßrige Lösung des mit diesem Vernetzer umgesetzten, mit Ethylenimin modifizierten Polyamidoamins betrug ca. 800 mPas.

Prüfung der anwendungstechnischen Eigenschaften der gemäß den Beispielen und Vergleichsbeispielen hergestellten Harze

Die gemäß den Beispielen und Vergleichsbeispielen erhaltenen Stoffe wurden auf ihre Wirkung als Entwässerungshilfsmittel und Retentionsmittel getestet. Für die Charakterisierung der Entwässerungsbeschleunigung der Stoffe diente die Mahlgradsenkung in °SR an einer Faserstoffaufschlämmung, die durch Aufschlagen von Zeitungspapier mit Hilfe eines Ultraturrax-Gerätes erhalten wurde. In der Tabelle 1 sind die ermittelten Meßwerte zusammengestellt, wobei jeder angegebene Wert ein Mittelwert aus 8 Messungen ist. Die Messungen wurden bei einem pH-Wert von 7,6 in Abwesenheit von Alaun und bei einem pH-Wert von 4,8 in Gegenwart von 1,5 % Alaun durchgeführt. Die Nullwerte wurden ohne Zusatz eines Harzes zum Faserstoff ermittelt.

Tabelle 1

Prüfung der Entwässerungswirkung

| pH | | 7,6 | | 4,8 | |
|---|---|---|---|---|---|
| Nullwert | | 72,5°SR | | 69°SR | |
| Zusatz von | 0,06 | 0,08 % | 0,06 | 0,09 % | |
| Harz gem. Beispiel | | | | | |
| 1 | 53 | 50 | 58 | 54 | |
| 2 | 54 | 49 | 58,5 | 55,5 | |
| 3 | 55 | 50 | 59 | 55 | |
| Zusatz von Harz gemäß | | | | | |
| Vergleichsbeispiel 1 | 56 | 51 | 61,5 | 58 | |
| Vergleichsbeispiel 2 | 55 | 50 | 60,5 | 57,5 | |

Zur Prüfung der Retentionswirkung der Harze gemäß den Beispielen 1 bis 3 und der Vergleichsbeispiele 1 und 2 wurde eine Faserstoffaufschlämmung verwendet, die zu 80 % aus gebleichtem Sulfitzellstoff (angemahlen, 37 °SR) und 20 % Füllstoff (Chinaclay) bestand. Die Füllstoffretention wurde bei Zusätzen von 0,015, 0,03 und 0,045 % der Harze zum Papierstoff bestimmt. Die Retention wurde bei einem pH-Wert von 6 (0,5 % Alaunzusatz zum Stoff) und 4,8 (1,5 % Alaun zum Stoff zugegeben) bestimmt. Der Nullwert wurde in Abwesenheit von Entwässerungshilfsmitteln und Retentionsmitteln ermittelt. Die für die Füllstoffretention erhaltenen Werte sind in Tabelle 2 angegeben.

Tabelle 2

| | | 6 | | | 4,8 | |
|---|---|---|---|---|---|---|
| pH/Fasersuspension | | 6 | | | 4,8 | |
| Einsatzmengen | 0,015 | 0,03 | 0,045 | 0,015 | 0,03 | 0,045 |
| Retention gemessen % Asche im Papier | | | | | | |
| Nullwert | 4,1 | | | | 4,5 | |
| Zusatz von Harz gemäß Beispiel | | | | | | |
| 1 | 8,7 | 9,8 | 11,3 | 8,5 | 9,5 | 11,5 |
| 2 | 8,6 | 9,7 | 11,1 | 8,0 | 9,1 | 10,3 |
| 3 | 8,5 | 9,1 | 11,0 | 8,1 | 9,1 | 10,5 |
| Zusatz von Harz gemäß Ver-gleichsbeispiel 1 | 7,5 | 8,6 | 10,3 | 7,0 | 8,4 | 10,0 |
| Vergleichsbeispiel 2 | 7,8 | 8,2 | 10,5 | 7,3 | 8,8 | 10,1 |

**Patentansprüche**

1. Verfahren zur Herstellung von wasserlöslichen, stickstoffhaltigen Kondensationsprodukten durch Umsetzung von Vernetzern, die durch

a) Kondensieren von 1 Mol einer Dicarbonsäure mit 4 bis 10 Kohlenstoffatomen mit 1 bis 2 Mol eines Polyalkylenpolyamins, das 3 bis 10 basische Stickstoffatome im Molekül aufweist, zu Polyamidoaminen und

b) Umsetzung der Polyamidoamine mit Epichlorhydrin und/oder Dichlorhydrin in wäßriger Lösung bei einem pH-Wert von 4,5 bis 8,5 und einer Temperatur bis 100 °C

hergestellt werden, wobei man auf 100 Gewichtsteile der Polyamidoamine gemäß a) 1 bis 130 Gewichtsteile Epichlorhydrin und/oder Dichlorhydrin einsetzt, mit Aminen in wäßriger Lösung bei Temperaturen bis 100 °C unter Bildung von wasserlöslichen Harzen, dadurch gekennzeichnet, daß man als Amin Ethylendiamin einsetzt.

2. Verwendung der nach Anspruch 1 hergestellten wasserlöslichen, stickstoffhaltigen Kondensationsprodukte als Retentionsmittel, Flockungsmittel und Entwässerungshilfsmittel bei der Papierherstellung.

**Claims**

1. A process for the production of a water-soluble, nitrogen-containing condensate by reacting a crosslinking agent, obtained by

a) condensing 1 mole of a dicarboxylic acid of 4 to 10 carbon atoms with from 1 to 2 moles of a polyalkylenepolyamine, having 3-10 basic nitrogen atoms in the molecule, to give a polyamidoamine, and

b) reacting the polyamidoamine with epichlorohydrin and/or dichlorohydrin in aqueous solution at a pH of from 4.5 to 8.5 and at not more than 100 °C, from 1 to 130 parts by weight of epichlorohydrin and/or dichlorohydrin being employed per 100 parts by weight of the polyamidoamine from (a),

with an amine in aqueous solution at not more than 100 °C, with the formation of a water-soluble resin, wherein ethylenediamine is used as the amine.

2. The use of a water-soluble, nitrogen-containing condensate as claimed in claim 1 as a retention aid, flocculant or drainage aid in papermaking.

**Revendications**

1. Procédé de préparation de produits de condensation azotés, solubles dans l'eau, par réaction de réticulants qui sont obtenus par :

a) condensation en polyamidoamines de 1 mole d'un acide dicarboxylique ayant 4 à 10 atomes de carbone avec 1 à 2 moles d'une polyalkylènepolyamine, qui comporte 3 à 10 atomes d'azote basiques dans la molécule, et

b) réaction de la polyamidoamine avec de l'épichlorhydrine et/ou dichlorhydrine en solution aqueuse, à un pH de 4,5 à 8,5 et une température allant jusqu'à 100 °C,

en introduisant, sur 100 parties en poids de la polyamidoamine selon a), 1 à 130 parties en poids d'épichlorhydrine et/ou dichlorhydrine, avec des amines, en solution aqueuse, à des températures jusqu'à 100 °C, en formant des résines solubles dans l'eau, caractérisé par le fait qu'on introduit, comme amine, de l'éthylènediamine.

2. Utilisation des produits de condensation azotés, solubles dans l'eau, obtenus selon la revendication 1, comme agents de rétention, floculants et auxiliaires de déshydratation pour la fabrication du papier.